(19) Europäisches Patentamt / European Patent Office / Office européen des brevets

(11) **EP 4 708 612 A1**

(12) **EUROPEAN PATENT APPLICATION**
published in accordance with Art. 153(4) EPC

(43) Date of publication:
**11.03.2026 Bulletin 2026/11**

(21) Application number: **24811388.8**

(22) Date of filing: **21.05.2024**

(51) International Patent Classification (IPC):
*H02J 7/00* (2026.01)    *H02M 3/07* (2006.01)
*H01M 10/44* (2006.01)    *H02J 7/34* (2006.01)

(52) Cooperative Patent Classification (CPC):
**H01M 10/44; H02J 7/00; H02J 7/34; H02M 3/07**

(86) International application number:
**PCT/KR2024/006867**

(87) International publication number:
**WO 2024/242449 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.05.2023  KR 20230067431
18.07.2023  KR 20230093411**

(71) Applicant: **Samsung Electronics Co., Ltd.
Suwon-si, Gyeonggi-do 16677 (KR)**

(72) Inventor: **LEE, Kyunghwan
Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54) **ELECTRONIC DEVICE FOR CHARGING BATTERY BY USING DIRECT CHARGER AND OPERATING METHOD THEREOF**

(57)    An electronic device according to an embodiment may comprise: a battery; a direct charger including a first capacitor, a second capacitor, and a plurality of switches; and a control circuit. The control circuit according to an embodiment may: identify a first mode in which a voltage input to the direct charger is converted at a 4:1 ratio and power is supplied to the battery; and control the plurality of switches at a first phase of providing second power having a second voltage which is 1/4 times a first voltage to the battery while charging a first capacitor and a second capacitor in series on the basis of first power of the first voltage received from the outside, a second phase of providing second power to the battery while charging the second capacitor with the power with which the first capacitor is charged, and a third phase of providing the second power to the battery on the basis of the power with which the second capacitor is charged, wherein a voltage which is twice the second voltage is applied to the first capacitor and the same voltage as the second voltage is applied to the second capacitor so that an output voltage is converted at a 4:1 ratio by only using two flying capacitors.

START

IDENTIFY FIRST MODE FOR SUPPLYING POWER TO BATTERY BY CONVERTING VOLTAGE INPUT TO DIRECT CHARGER AT 4:1 RATIO — 401

CONTROL PLURALITY OF SWITCHES TO PROVIDE SECOND POWER HAVING SECOND VOLTAGE TO BATTERY WHILE CHARGING FIRST CAPACITOR AND SECOND CAPACITOR BY CONNECTING FIRST CAPACITOR AND SECOND CAPACITOR IN SERIES BASED ON FIRST POWER OF FIRST VOLTAGE PROVIDED FROM OUTSIDE IN FIRST PHASE OF SWITCHING PERIOD FOR PLURALITY OF SWITCHES — 403

CONTROL PLURALITY OF SWITCHES TO PROVIDE SECOND POWER TO BATTERY WHILE CHARGING SECOND CAPACITOR BASED ON POWER CHARGED IN FIRST CAPACITOR IN SECOND PHASE OF SWITCHING PERIOD — 405

CONTROL PLURALITY OF SWITCHES TO PROVIDE SECOND POWER TO BATTERY BASED ON POWER CHARGED IN SECOND CAPACITOR IN THIRD PHASE OF SWITCHING PERIOD — 407

END

**FIG. 4**

**Description**

[Technical Field]

Various embodiments of the disclosure relate to an electronic device for charging a battery using a direct charger and a method of operating the same.

[Background Art]

Recently, the use of portable electronic devices such as smartphones, tablet PCs, wearable devices, or augmented reality (AR) glasses has been increasing, and as the use of electronic devices has rapidly increased, research on batteries to extend usage time has been actively conducted. These electronic devices may be configured to use a quick charging method that may receive a larger amount of power in order to receive more power stably.

[Detailed Description of the Invention]

[Technical Solution]

An electronic device according to an embodiment may include a battery, a direct charger including a first capacitor, a second capacitor and a plurality of switches, and a control circuit. The control circuit according to an embodiment may be configured to identify a first mode for supplying power to the battery by converting a voltage input to the direct charger at a 4:1 ratio. The control circuit according to an embodiment may be configured to control the plurality of switches to provide a second power having a second voltage to the battery while charging the first capacitor and the second capacitor by connecting the first capacitor and the second capacitor in series based on a first power of a first voltage received from outside in a first phase of a switching period for the plurality of switches. The first voltage according to an embodiment may have a magnitude four times the second voltage. The control circuit according to an embodiment may be configured to control the plurality of switches to provide the second power to the battery while charging the second capacitor based on power charged in the first capacitor in a second phase after the first phase of the switching period. The control circuit according to an embodiment may be configured to control the plurality of switches to provide the second power to the battery based on power charged in the second capacitor in a third phase after the second phase of the switching period. According to an embodiment, during the first phase, the second phase, and the third phase, a voltage having a magnitude twice the second voltage may be applied to the first capacitor, and a voltage having the same magnitude as the second voltage may be applied to the second capacitor. According to an embodiment, even when a length of at least one of the first phase, the second phase, or the third phase is changed, the voltage having the magnitude twice the second voltage may be applied to the first capacitor, and the voltage having the same magnitude as the second voltage may be applied to the second capacitor.

In a method of operating an electronic device according to an embodiment, the electronic device may include a battery and a direct charger, wherein the direct charger may include a first capacitor, a second capacitor and a plurality of switches. The method of operating the electronic device according to an embodiment may include identifying a first mode for supplying power to the battery by converting a voltage input to the direct charger at a 4:1 ratio. The method of operating the electronic device according to an embodiment may include controlling the plurality of switches to provide a second power having a second voltage to the battery while charging the first capacitor and the second capacitor by connecting the first capacitor and the second capacitor in series based on a first power of a first voltage received from outside in a first phase of a switching period for the plurality of switches. The first voltage according to an embodiment may have a magnitude four times the second voltage. The method of operating the electronic device according to an embodiment may include controlling the plurality of switches to provide the second power to the battery while charging the second capacitor based on power charged in the first capacitor in a second phase after the first phase of the switching period. The method of operating the electronic device according to an embodiment may include controlling the plurality of switches to provide the second power to the battery based on power charged in the second capacitor in a third phase after the second phase of the switching period. According to an embodiment, during the first phase, the second phase, and the third phase, a voltage having a magnitude twice the second voltage may be applied to the first capacitor, and a voltage having the same magnitude as the second voltage may be applied to the second capacitor. According to an embodiment, even when a length of at least one of the first phase, the second phase, or the third phase is changed, the voltage having the magnitude twice the second voltage may be applied to the first capacitor, and the voltage having the same magnitude as the second voltage may be applied to the second capacitor.

[Brief Description of Drawings]

FIG. 1 is a block diagram illustrating an electronic device in a network environment according to an embodiment.
FIG. 2A is a block diagram illustrating a schematic configuration of an electronic device according to an embodiment.
FIG. 2B is a flowchart illustrating an operation of an electronic device determining a mode of a charging circuit according to an embodiment.

FIG. 3A is a circuit diagram illustrating a conventional direct charger according to a comparative embodiment.

FIG. 3B is a circuit diagram illustrating a direct charger according to an embodiment.

FIG. 4 is a flowchart illustrating an operation of an electronic device charging a battery according to a first mode according to an embodiment.

FIGS. 5A, 5B and 5C are views illustrating an operation of an electronic device charging a battery according to a first mode according to an embodiment.

FIG. 6 illustrates graphs illustrating an operation of an electronic device charging a battery according to a first mode according to an embodiment.

FIG. 7 is a circuit diagram illustrating a direct charger charging a battery according to a second mode according to an embodiment.

FIG. 8 is a flowchart illustrating an operation of an electronic device charging a battery according to a second mode according to an embodiment.

FIGS. 9A and 9B are views illustrating an operation of an electronic device charging a battery according to a second mode according to an embodiment.

FIG. 10 illustrates graphs illustrating an operation of an electronic device charging a battery according to a second mode according to an embodiment.

FIG. 11 is a circuit diagram illustrating a direct charger charging a battery according to a third mode according to an embodiment.

FIG. 12 is a flowchart illustrating an operation of an electronic device charging a battery according to a third mode according to an embodiment.

FIGS. 13A and 13B are views illustrating an operation of an electronic device charging a battery according to a third mode according to an embodiment.

FIG. 14 illustrates graphs illustrating an operation of an electronic device charging a battery according to a third mode according to an embodiment.

FIG. 15 is a view illustrating effects of a direct charger according to an embodiment.

[Mode for Carrying out the Invention]

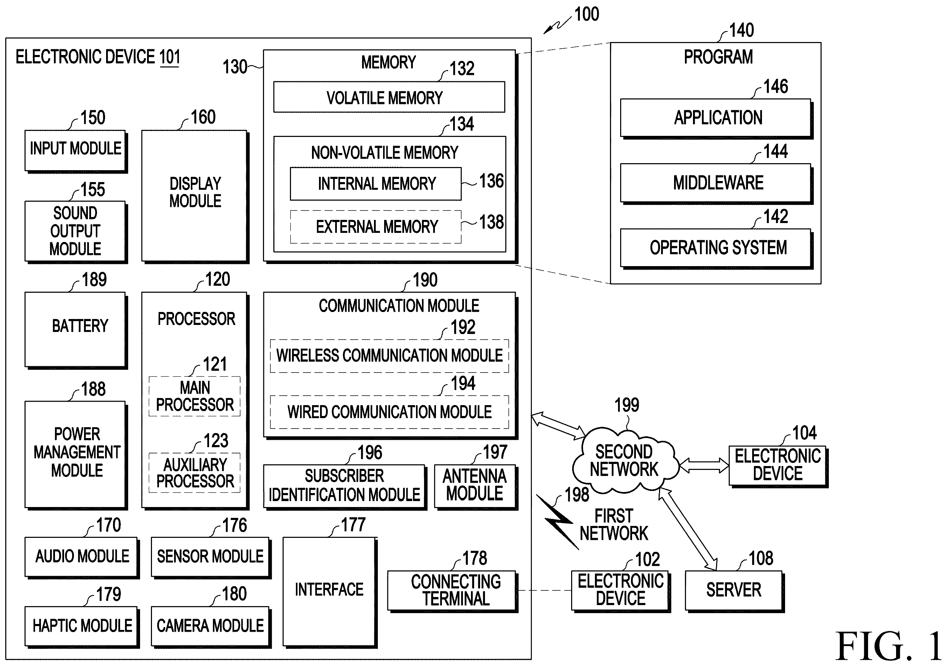

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth™, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

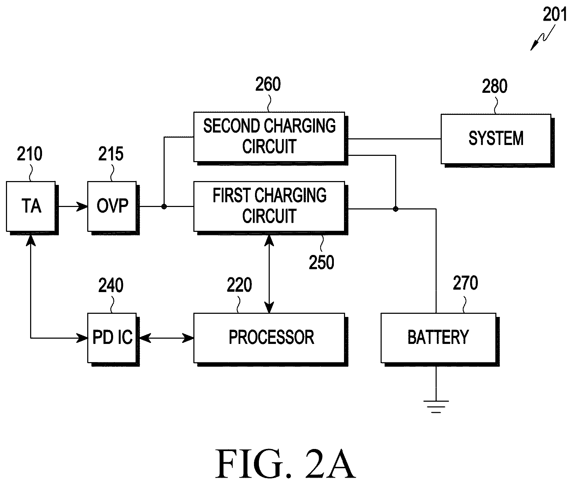

FIG. 2A is a block diagram illustrating a schematic configuration of an electronic device according to an embodiment.

Referring to FIG. 2A, an electronic device 201 (e.g., the electronic device 101 of FIG. 1) according to an embodiment may include an over-voltage protection (OVP) 215, a processor 220, a power delivery (PD) integrated circuit (IC) 240, a first charging circuit 250, a second charging circuit 260, a battery 270, and a system 280. The electronic device 201 according to an embodiment is not limited thereto and may be configured to further include various components or may be configured by excluding some of the components. According to an embodiment, the electronic device 201 may include the whole or part of the electronic device 101 of FIG. 1.

According to an embodiment, the electronic device 201 may receive power from an external power transmitter (e.g., travel adapter (TA)) 210 through a wired interface (not illustrated). For example, the electronic device 201 may receive required power within the corresponding maximum power based on the maximum power supported by the power transmitter 210. The power transmitter 210 may adjust the voltage of the corresponding power according to the power required by the electronic device 201. For example, the power transmitter 210 may adjust the voltage within a designated range (e.g., 3V to 21V) and supply or provide power having the adjusted voltage to the electronic device 201. For example, the power transmitter 210 may be implemented as a programmable power supply (PPS) charger.

According to an embodiment, the wired interface (not illustrated) may include a connection unit (e.g., USB port) that may be connected to the power transmitter 210. For example, the wired interface (not illustrated) may further include a PD IC 240 for receiving power wiredly. According to the implementation, the PD IC 240 may be implemented as a separate configuration from the wired interface. The PD IC 240 may request the power required by the electronic device 201 from the power transmitter 210 according to the control of the processor 220.

According to an embodiment, the OVP 215 may perform a function of protecting the first charging circuit 250 and the second charging circuit 260 from power supplied from the external power transmitter 210. For example, the OVP 215 may perform an over-voltage protection function. For example, the OVP 215 may block power having a voltage greater than a designated voltage.

According to an embodiment, the first charging circuit 250 may receive power from the external power transmitter 210 through the OVP 215. The first charging circuit 250 may generate power for charging the battery 270 based on the received power. The first charging circuit 250 may support quick charging. For example, the first charging circuit 250 may convert the voltage of the received power to a voltage required for the battery 280 (e.g., 5V). For example, the first charging circuit 250 may convert the voltage of the received power at a 4:1 ratio, a 3:1 ratio, or a 2:1 ratio. The first charging circuit 250 may supply power having the converted voltage to the battery 270. For example, the first charging circuit 250 may supply power directly to the battery 270 without going through a separate circuit (e.g., an LC circuit or a circuit including an inductor). For example, the first charging circuit 250 may include at least one of a direct charger, a switched capacitor voltage converter, or a switched capacitor voltage divider.

According to an embodiment, the second charging circuit 260 may provide power supplied from the external power transmitter 210 to the system 280. Alternatively, the second charging circuit 260 may provide power stored in the battery 270 to the system 280. For example, the system 280 may refer to components of the electronic device 201. For example, the second charging circuit 260 may be implemented as a charger circuit (e.g., DC/DC converter, buck converter, buck booster, buck boost/converter).

According to an embodiment, the processor 220 may control the overall operation of the electronic device 201. For example, the processor 220 may be implemented to be the same as or similar to the processor 120 of FIG. 1.

According to an embodiment, the processor 220 may identify a magnitude of power received or provided by the external power transmitter 210. For example, the processor 220 may identify the voltage of power received or provided from the power transmitter 210.

According to an embodiment, the processor 220 may control the first charging circuit 250 based on a magnitude of power (or magnitude of voltage) received or provided from the power transmitter 210, and charge the battery 270 through the charging circuit 250. For example, the processor 220 may determine an operation mode of the first charging circuit 250 based on a voltage received or provided from the power transmitter 210.

According to an embodiment, the first charging circuit 250 may convert a voltage received or provided from the power transmitter 210 at a 4:1 ratio, a 3:1 ratio, or a 2:1 ratio based on the determined operation mode. For example, when the processor 220 identifies that 20V power is received from the power transmitter 210, the processor 220 may control the first charging circuit 250 so that the first charging circuit 250 converts the 20V voltage to 5V. When the processor 220 identifies that 15V power is received from the power transmitter 210, the processor 220 may control the first charging circuit 250 so that the first charging circuit 250 converts the 15V voltage to 5V. When the processor 220 identifies that 10V (or 9V) power is received from the power transmitter 210, the processor 220 may control the first charging circuit 250 so that the first charging circuit 250 converts the 10V (or 9V) voltage to 5V (or 4.5V).

According to an embodiment, the first charging circuit 250 may control on/off of a plurality of switches included in the first charging circuit 250 according to control of the processor 220. The first charging circuit 250 may control on/off of the plurality of switches to convert a voltage received or provided from the power transmitter 210 to a voltage corresponding to the corresponding operation mode. According to the implementation, the first charging circuit 250 may further include a separate control circuit (not illustrated). The control circuit (not illustrated) may control on/off of the plurality of switches based on control of the processor 220. To this end, the control circuit (not illustrated) may output a control signal for controlling on/off of the plurality of switches.

According to the above-described method, the processor 220 may control the first charging circuit 250 to provide power having a voltage required by the battery 270 to the battery 270.

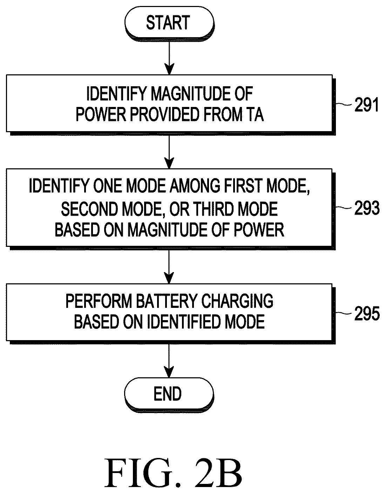

FIG. 2B is a flowchart illustrating an operation of an electronic device determining a mode of a charging circuit according to an embodiment.

Referring to FIG. 2B, according to an embodiment, in operation 291, the electronic device 201 (or the processor 220) may identify a magnitude of power provided from the external power transmitter (TA) 210. For example, the electronic device 201 may identify a magnitude of voltage provided from the power transmitter (TA) 210.

According to an embodiment, in operation 293, the electronic device 201 (or the processor 220) may identify any one mode among a plurality of operation modes (e.g., first mode, second mode, or third mode) of the first charging circuit 250 based on the magnitude of power (or magnitude of voltage). For example, the first mode may refer to an operation mode in which the first charging circuit 250 converts a voltage received or provided from the power transmitter 210 at a 4:1 ratio. The second mode may refer to an operation mode in which the first charging circuit 250 converts a voltage received or provided from the power transmitter 210 at a 2:1 ratio. The third mode may refer to an operation mode in which the first charging circuit 250 converts a voltage received or provided from the power transmitter 210 at a 3:1 ratio. The first charging circuit 250 may control on/off of a plurality of switches included in the first charging circuit 250 according to control of the processor 220. The first charging circuit 250 may control on/off of the plurality of switches to convert a voltage received or provided from the power transmitter 210 to a voltage corresponding to the corresponding mode.

According to an embodiment, in operation 295, the electronic device 201 may control the first charging circuit 250 based on the identified mode and perform an operation of charging the battery 270 through the first charging circuit 250. For example, the electronic device 201 may provide or supply power having a voltage required by the battery 270 to the battery 270 through the first charging circuit 250.

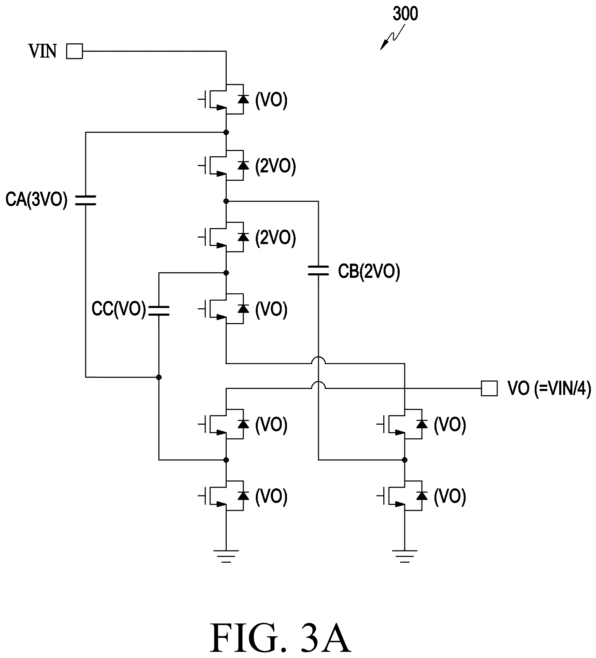

FIG. 3A is a circuit diagram illustrating a conventional direct charger according to a comparative embodiment.

Referring to FIG. 3A, according to a comparative embodiment, the conventional direct charger 300 may convert a voltage VIN received or provided from the power transmitter 210 at a 4:1 ratio. The conventional direct charger 300 may output power having the converted voltage VO to a battery (not illustrated). For example, the output voltage VO of the direct charger 300 may be 1/4 times the input voltage VIN. The conventional direct charger 300 may include three flying capacitors CA, CB, CC and eight switches. For example, the three flying capacitors CA, CB, CC may include a capacitor CA with a withstand voltage of 3VO, a capacitor CB with 2VO, and a capacitor CC with VO based on the output voltage VO of the direct charger 300. Further, the eight switches may include two switches with a withstand voltage of 2VO and six switches with VO based on the output voltage VO of the direct charger 300. For example, the conventional direct charger 300 may be a direct charger of a Dickson topology method.

According to a comparative embodiment, the conventional direct charger 300 may have a significantly increased mounting area (e.g., more than 2 times) for converting the voltage VIN received or provided from the power transmitter 210 at a 4:1 ratio compared to when converting the voltage VIN at a 2:1 ratio. In this case, the three flying capacitors may be the biggest factor in increasing the mounting area of the direct charger 300. For example, a capacitor CC with a withstand voltage of 3VO may be larger in size than a capacitor CB with a withstand voltage of 2VO or a capacitor CC with VO. In other words, the conventional direct charger 300 may need to additionally secure mounting space for mounting in an electronic device. Further, the conventional direct charger 300 may have increased product production costs due to the components.

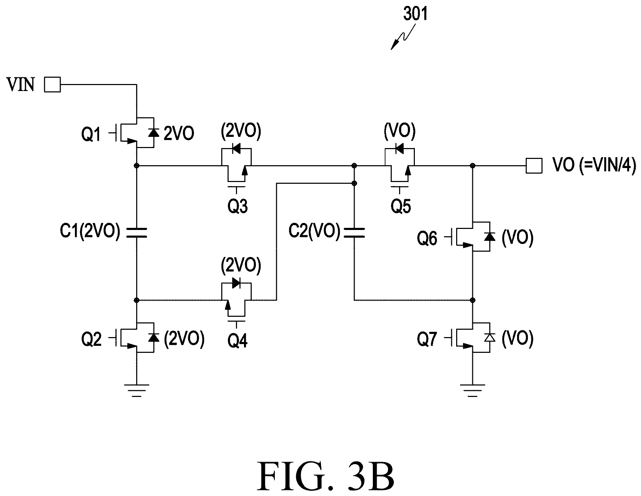

FIG. 3B is a circuit diagram illustrating a direct charger according to an embodiment.

Referring to FIG. 3B, according to an embodiment, the direct charger 301 may convert a voltage VIN received or provided from the power transmitter 210 at a 4:1 ratio. The direct charger 301 may output power having the converted voltage VO to a battery (e.g., the battery 270 of FIG. 2). For example, the output voltage VO of the direct charger 301 may be 1/4 times the input voltage VIN. According to the implementation, the direct charger 301 may convert a voltage VIN received or provided from the power transmitter 210 at a 2:1 ratio or a 3:1 ratio. In this case, the output voltage VO of the direct charger 301 may be 1/2 times or 1/3 times the input voltage VIN. For example, the first charging circuit 250 of FIG. 2 may include the direct charger 301 of FIG. 3B.

According to an embodiment, the direct charger 301 may include two capacitors C1, C2 and seven switches Q1, Q2, Q3, Q4, Q5, Q6, Q7. For example, each of the two capacitors C1, C2 may be implemented as a flying capacitor. For example, each of the seven switches Q1, Q2, Q3, Q4, Q5, Q6, Q7 may be implemented as a metal oxide semiconductor field effect transistor (MOSFET). For example, the two flying capacitors C1, C2 may include a capacitor C1 with a withstand voltage of 2VO and a capacitor C2 with VO based on the output voltage VO of the direct charger 301. Further, the seven switches Q1, Q2, Q3, Q4, Q5, Q6, Q7 may include four switches Q1, Q2, Q3, Q4 with a withstand voltage of 2VO and three switches Q5, Q6, Q7 with VO based on the output voltage VO of the direct charger 301.

According to an embodiment, the first switch Q1 may be connected between the input terminal of the direct charger 301 and one end of the first capacitor C1. The second switch Q2 may be connected between the other end of the first capacitor C1 and ground. The third switch Q3 may be connected between the one end of the first capacitor C1 and one end of the second capacitor C2. The fourth switch Q4 may be connected between the other end of the first capacitor C1 and the one end of the second capacitor C2. The fifth switch Q5 may be connected between the one end of the second capacitor C2 and the output terminal of the direct charger 301. The sixth switch Q6 may be connected between the other end of the second capacitor C2 and the output terminal of the direct charger 301. The seventh switch Q7 may be connected between the other end of the second capacitor C2 and the ground.

The direct charger 301 according to an embodiment may have a decreased number and size of flying capacitors compared to the direct charger 300 of FIG. 3A. Accordingly, the direct charger 301 may reduce the mounting area compared to the conventional direct charger 300. Further, the direct charger 301 according to an embodiment may have decreased product production costs compared to the conventional direct charger 300.

At least a portion of the operation of controlling the first charging circuit 250 described below may be performed by the processor 220. However, according to implementation, at least a portion of the operation of controlling the plurality of switches Q1, Q2, Q3, Q4, Q5, Q6, Q7 included in the first charging circuit 250 may be performed by a control circuit (not illustrated) included in the charging circuit. However, for convenience of description, the subject of the operations described later will be assumed to be the electronic device 201.

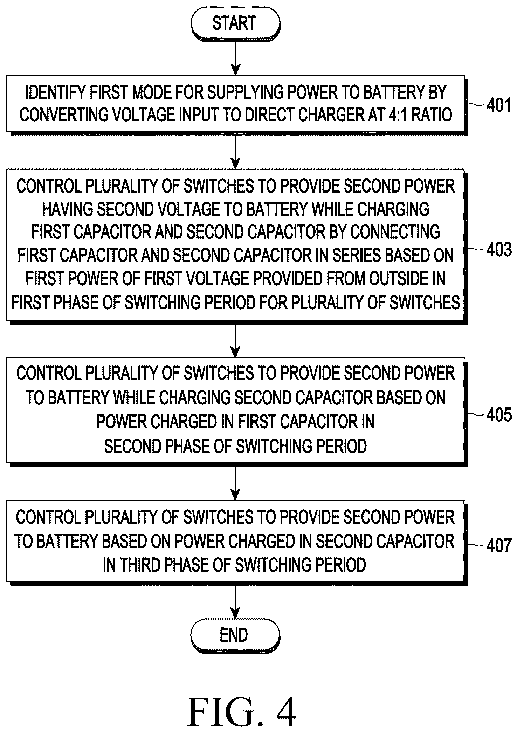

FIG. 4 is a flowchart illustrating an operation of an electronic device charging a battery according to a first mode according to an embodiment.

Referring to FIG. 4, according to an embodiment, in operation 401, an electronic device (e.g., the electronic device 201 of FIG. 2) may identify or determine a first mode for supplying power to a battery by converting a first voltage VIN input to a direct charger (e.g., the direct charger 301 of FIG. 3B) at a 4:1 ratio based on a first power of a first voltage VIN provided from an external power transmitter (e.g., the power transmitter 210 of FIG. 2).

According to an embodiment, the electronic device 201 may control on/off of a plurality of switches (e.g., Q1, Q2, Q3, Q4, Q5, Q6, Q7 of FIG. 3B) included in the direct charger according to a designated switching period. For example, the switching period may refer to one switching period in which the plurality of switches Q1, Q2, Q3, Q4, Q5, Q6, Q7 are turned on/off for the direct charger 301 to convert voltage according to the corresponding mode. For example, the switching period in the first mode may include three phases (e.g., first phase, second phase, and third phase). For example, a sum of lengths of the first phase and the second phase may be longer than a length of the third phase. The length of the first phase and the length of the second phase may be the same. For example, the switching period may be automatically set by the processor 220 or set by a user.

According to an embodiment, the electronic device 201 may identify a state of a system load of the electronic device 201 (e.g., load for the system 280 of FIG. 2). For example, the electronic device 201 may identify a transient state (e.g., overload state or underload state) for the system load of the electronic device 201. The electronic device 201 may change or adjust the length of phases included in the switching period based on the state of the system load of the electronic device 201. For example, the electronic device 201 may change or adjust the length of phases included in the switching period based on identifying the transient state. For example, when the electronic device 201 identifies that a large amount of current is instantaneously required for the system 280, it may change the length of at least one of the first phase, second phase, or third phase included in the switching period to stabilize the corresponding transient state.

According to an embodiment, in operation 403, the electronic device 201 may control the plurality of switches Q1, Q2, Q3, Q4, Q5, Q6, Q7 to provide a second power having a second voltage VO to the battery (e.g., the battery 270 of FIG. 2) while charging the first capacitor C1 and the second capacitor C2 by connecting the first capacitor (e.g., C1 of FIG. 3B) and the second capacitor (e.g., C2 of FIG. 3B) in series based on the first power of the first voltage VIN provided from outside in the first phase of the switching period for the plurality of switches Q1, Q2, Q3, Q4, Q5, Q6, Q7. For example, the first power may refer to power (e.g., input power) input from the power transmitter 210 to the direct charger 301. The second power may refer to power (e.g., output power) output from the direct charger 301 to the battery 270. For example, the first voltage VIN may refer to a voltage (e.g., input voltage) input to the direct charger 301. The second voltage VO may refer to a voltage (e.g., output voltage) output from the direct charger 301. In the first mode, the first voltage VIN may be four times the second voltage VO.

According to an embodiment, in operation 405, the electronic device 201 may control the plurality of switches Q1, Q2, Q3, Q4, Q5, Q6, Q7 to provide the second power to the battery 270 while charging the second capacitor C2 based on power charged in the first capacitor C1 in the second phase (e.g., phase after the first phase) of the switching period.

According to an embodiment, in operation 407, the electronic device 201 may control the plurality of switches Q1, Q2, Q3, Q4, Q5, Q6, Q7 to provide the second power to the battery 270 based on power charged in the second capacitor C2 in the third phase (e.g., phase after the second phase) of the switching period.

According to an embodiment, while the above-described operations are performed, a voltage 2VO having a magnitude twice the output voltage VO of the direct charger 301 may be applied to the first capacitor C1. Further, a voltage VO having the same magnitude as the output voltage VO of the direct charger 301 may be applied to the second capacitor C2. For example, the voltage (e.g., DC voltage) applied to the first capacitor C1 in one switching period may maintain a voltage 2VO having a magnitude twice the output voltage VO of the direct charger 301. Further, the voltage (e.g., DC voltage) applied to the second capacitor C2 in one switching period may maintain a voltage VO having the same magnitude as the output voltage VO of the direct charger 301.

According to an embodiment, even when the length of at least one of the first phase, second phase, or third phase is changed, a voltage having a magnitude twice the second voltage VO may be applied to the first capacitor C1. Further, even when the length of at least one of the first phase, second phase, or third phase is changed, a voltage having the same magnitude as the second voltage VO may be applied to the second capacitor C2.

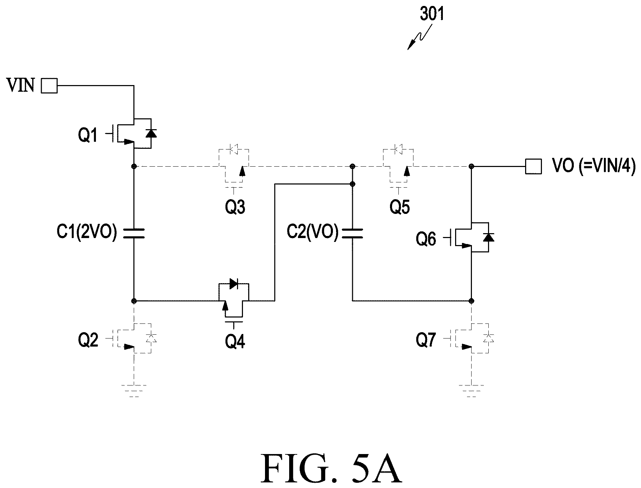

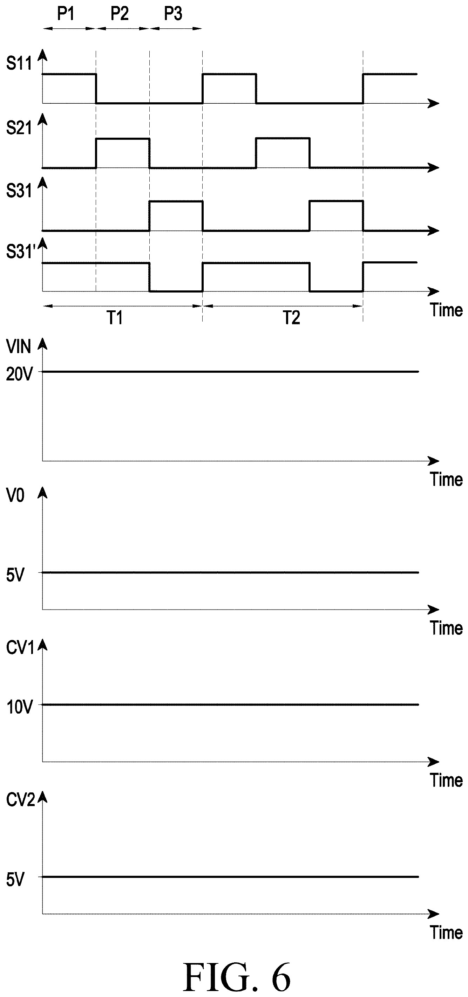

FIGS. 5A to 5C are views illustrating an operation of an electronic device charging a battery according to a first mode according to an embodiment. FIG. 6 illustrates graphs illustrating an operation of an electronic device charging a battery according to a first mode according to an embodiment.

Referring to FIGS. 5A to 6, according to an embodiment, the direct charger 301 may control on/off of the plurality of switches Q1, Q2, Q3, Q4, Q5, Q6, Q7 in the first mode to output power having an output voltage VO (e.g., 5V) that is 1/4 times the input voltage VO (e.g., 20V) to a battery (e.g., the battery 270 of FIG. 2).

Referring to FIGS. 5A and 6, according to an embodiment, the direct charger 301 may control the plurality of switches Q1, Q2, Q3, Q4, Q5, Q6, Q7 to output a second power having an output voltage VO while charging the first capacitor C1 and the second capacitor C2 by connecting the first capacitor C1 and the second capacitor C2 in series based on a first power having an input voltage VIN in the first phase P1 of the switching period T1. For example, the direct charger 301 may turn on the first switch Q1, the fourth switch Q4, and the sixth switch Q6, and turn off the second switch Q2, the third switch Q3, the fifth switch Q5, and the seventh switch Q7.

Referring to FIG. 6, according to an embodiment, a control circuit included in the direct charger 301 may output control signals S1, S2, S3, S3' for controlling on/off of the plurality of switches Q1, Q2, Q3, Q4, Q5, Q6, Q7 to the plurality of switches Q1, Q2, Q3, Q4, Q5, Q6, Q7 in the first phase P1. For example, a high-level control signal may turn on the corresponding switch. Further, a low-level control signal may turn off the corresponding switch. For example, the control circuit may output a high-level first control signal S11 to the first switch Q1 and the fourth switch Q4 in the first phase P1. The control circuit may output a low-level second control signal S21 to the second switch Q2 and the third switch Q3. The control circuit may output a low-level third control signal S31 to the fifth switch Q5 and the seventh switch Q7. Further, the control circuit may output a high-level fourth control signal S31' to the sixth switch Q6. For example, the fourth control signal S31' may refer to a signal obtained by inverting the third control signal S31.

According to an embodiment, in the first phase P1, voltages applied to the first capacitor C1 and the second capacitor C2 may be determined by Equation 1. For example, VIN may be the input voltage of the direct charger 301, and VO may be the output voltage of the direct charger 301. CV1 may be a voltage applied to the first capacitor C1, and CV2 may be a voltage applied to the second capacitor C1.

【Equation 1】

$$VIN - VO = CV1 + CV2$$

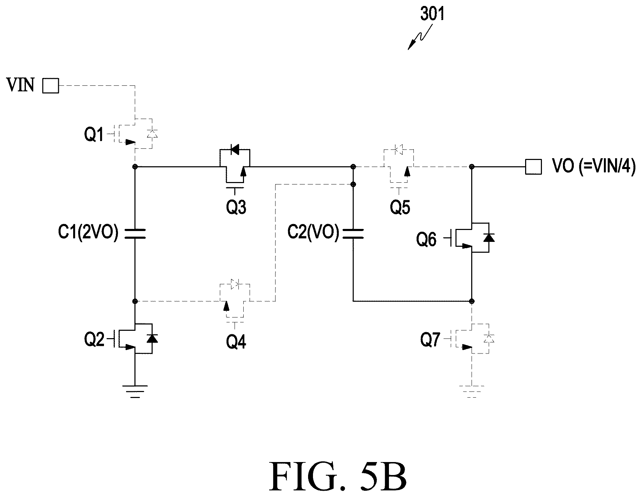

Referring to FIGS. 5B and 6, according to an embodiment, the direct charger 301 may control the plurality of switches Q1, Q2, Q3, Q4, Q5, Q6, Q7 to output a second power having an output voltage VO to the battery 270 while charging the second capacitor C2 based on power charged in the first capacitor C1 in the second phase P2 of the switching period T1. For example, the direct charger 301 may turn on the second switch Q2, the third switch Q3, and the sixth switch Q6, and turn off the first switch Q1, the fourth switch Q4, the fifth switch Q5, and the seventh switch Q7. For example, a control circuit included in the direct charger 301 may output a control signal for controlling on/off of the plurality of switches Q1, Q2, Q3, Q4, Q5, Q6, Q7 to the plurality of switches Q1, Q2, Q3, Q4, Q5, Q6, Q7.

Referring to FIG. 6, according to an embodiment, the control circuit included in the direct charger 301 may output a low-level first control signal S11 to the first switch Q1 and the fourth switch Q4 in the second phase P2. The control circuit may output a high-level second control signal S2 to the second switch Q2 and the third switch Q3. The control circuit may output a low-level third control signal S31 to the fifth switch Q5 and the seventh switch Q7. Further, the control circuit may output a high-level fourth control signal S31' to the sixth switch Q6.

According to an embodiment, in the second phase P2, voltages applied to the first capacitor C1 and the second capacitor C2 may be determined by Equation 2.

【Equation 2】

$$CV1 - VO = CV2$$

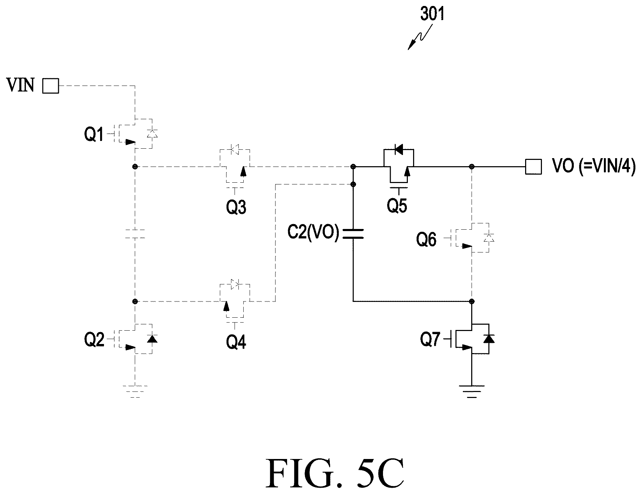

Referring to FIGS. 5C and 6, according to an embodiment, the electronic device 201 may control the plurality of switches Q1, Q2, Q3, Q4, Q5, Q6, Q7 to provide the second power to the battery 270 based on power charged in the second capacitor C2 in the third phase P3 of the switching period T1. For example, the direct charger 301 may turn on the fifth switch Q5 and the seventh switch Q7, and turn off the remaining switches Q1, Q2, Q3, Q4, Q6. For example, a control circuit included in the direct charger 301 may output a control signal for controlling on/off of the plurality of switches Q1, Q2, Q3, Q4, Q5, Q6, Q7 to the plurality of switches Q1, Q2, Q3, Q4, Q5, Q6, Q7.

Referring to FIG. 6, according to an embodiment, the control circuit included in the direct charger 301 may output a low-level first control signal S11 to the first switch Q1 and the fourth switch Q4 in the third phase P3. The control circuit may output a low-level second control signal S21 to the second switch Q2 and the third switch Q3. The control circuit may output a high-level third control signal S31 to the fifth switch Q5 and the seventh switch Q7. Further, the control circuit may output a low-level fourth control signal S31' to the sixth switch Q6.

According to an embodiment, in the third phase P3, voltages applied to the first capacitor C1 and the second capacitor C2 may be determined by Equation 3.

【Equation 3】

$$CV2 = VO$$

Based on the above-described Equations 1, 2, and 3, the voltage applied to the first capacitor C1 may be a voltage 2VO (e.g., 10V) having a magnitude twice the output voltage VO of the direct charger 301, and the voltage applied to the second capacitor C2 may be a voltage VO (e.g., 5V) having the same magnitude as the output voltage VO of the direct charger 301.

Referring to FIG. 6, according to an embodiment, the voltage (e.g., DC voltage) applied to the first capacitor C1 in one switching period T1 may maintain a voltage 2VO (e.g., 10V) having a magnitude twice the output voltage VO (e.g., 5V) of the direct charger 301. The voltage (e.g., DC voltage) applied to the second capacitor C2 in one switching period T1 may maintain a voltage VO (e.g., 5V) having the same magnitude as the output voltage VO (e.g., 5V) of the direct charger 301. Further, the magnitudes of the voltages applied to the first capacitor C1 and the second capacitor C2 may be maintained in the next switching period T2.

According to the above-described method, the electronic device 201 may supply power having an output voltage VO that is 1/4 times the input voltage VIN to the battery 270 using the direct charger 301.

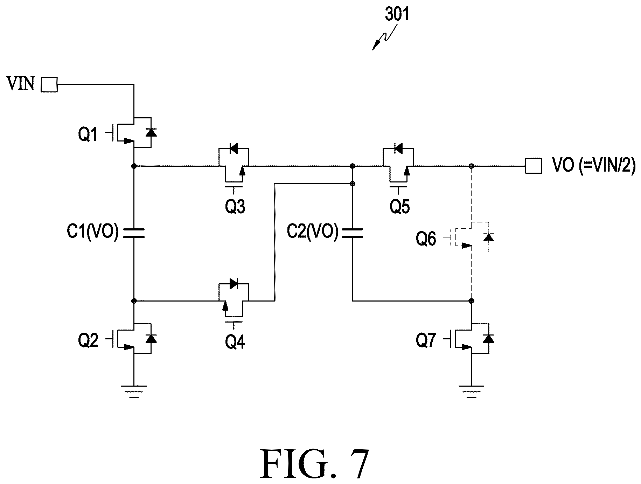

FIG. 7 is a circuit diagram illustrating a direct charger charging a battery according to a second mode according to an embodiment.

Referring to FIG. 7, according to an embodiment, the direct charger 301 may control on/off of the plurality of switches Q1, Q2, Q3, Q4, Q5, Q6, Q7 in the second mode to output power having an output voltage VO (e.g., 5V) that is 1/2 times the input voltage VO (e.g., 10V) to a battery (e.g., the battery 270 of FIG. 2).

According to an embodiment, the direct charger 301 may control on/off of the plurality of switches Q1, Q2, Q3, Q4, Q5, Q6, Q7 differently from the first mode in the second mode. For example, the direct charger 301 may always turn on the fifth switch Q5 and the seventh switch Q7 in the second mode. Further, the direct charger 301 may always turn off the sixth switch Q6 in the second mode. For example, the direct charger 301 may turn on the first switch Q1 and the fourth switch Q4 and turn off the second switch Q2 and the third switch Q3 during one phase period included in the switching period while maintaining the states of the fifth switch Q5, the seventh switch Q7, and the sixth switch Q6. Further, the direct charger 301 may turn off the first switch Q1 and the fourth switch Q4 and turn on the second switch Q2 and the third switch Q3 during another phase period included in the switching period while maintaining the states of the fifth switch Q5, the seventh switch Q7, and the sixth switch Q6.

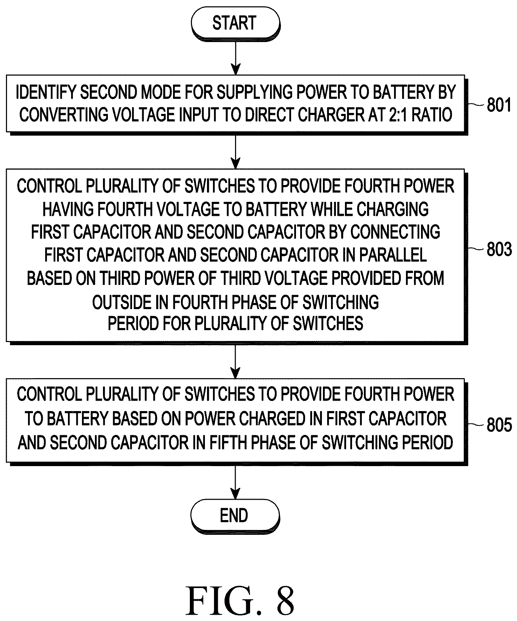

FIG. 8 is a flowchart illustrating an operation of an electronic device charging a battery according to a second mode according to an embodiment.

Referring to FIG. 8, according to an embodiment, in operation 801, an electronic device (e.g., the electronic device 201 of FIG. 2) may identify or determine a second mode for supplying power to a battery (e.g., the battery 270 of FIG. 2) by converting a first voltage VIN input to a direct charger (e.g., the direct charger 301 of FIG. 3B) at a 2:1 ratio based on a first power of a first voltage VIN provided from an external power transmitter (e.g., the power transmitter 210 of FIG. 2).

According to an embodiment, the electronic device 201 may control on/off of a plurality of switches (e.g., Q1, Q2, Q3, Q4, Q5, Q6, Q7 of FIG. 3B) included in the direct charger according to a designated switching period. For example, the switching period in the second mode may include two phases (e.g., fourth phase and fifth phase). For example, the length of the fourth phase and the length of the fifth phase may be the same. For example, the switching period may be automatically set by the processor 220 or set by a user.

According to an embodiment, in operation 803, the electronic device 201 may control the plurality of switches Q1, Q2, Q3, Q4, Q5, Q6, Q7 to provide a fourth power having a fourth voltage VO to the battery 270 while charging the first capacitor C1 and the second capacitor C2 by connecting the first capacitor C1 and the second capacitor C2 in parallel based on a third power of a third voltage VIN provided from outside in the fourth phase of the switching period for the plurality of switches Q1, Q2, Q3, Q4, Q5, Q6, Q7. For example, the third power may refer to power (e.g., input power) input from the power transmitter 210 to the direct charger 301. The fourth power may refer to power (e.g., output power) output from the direct charger 301 to the battery 270. For example, the third voltage VIN may refer to a voltage (e.g., input voltage) input to the direct charger 301. The fourth voltage VO may refer to a voltage (e.g., output voltage) output from the direct charger 301. In the second mode, the third voltage VIN may be twice the fourth voltage VO.

According to an embodiment, in operation 805, the electronic device 201 may control the plurality of switches Q1, Q2, Q3, Q4, Q5, Q6, Q7 to provide the fourth power to the battery 270 based on power charged in the first capacitor C1 and the second capacitor C2 in the fifth phase (e.g., phase after the fourth phase) of the switching period.

According to an embodiment, while the above-described operations are performed, a voltage VO having the same magnitude as the output voltage VO of the direct charger 301 may be applied to each of the first capacitor C1 and the second capacitor C2. For example, the voltage (e.g., DC voltage) applied to each of the first capacitor C1 and the second capacitor C2 in one switching period may maintain a voltage VO having the same magnitude as the output voltage VO of the direct charger 301.

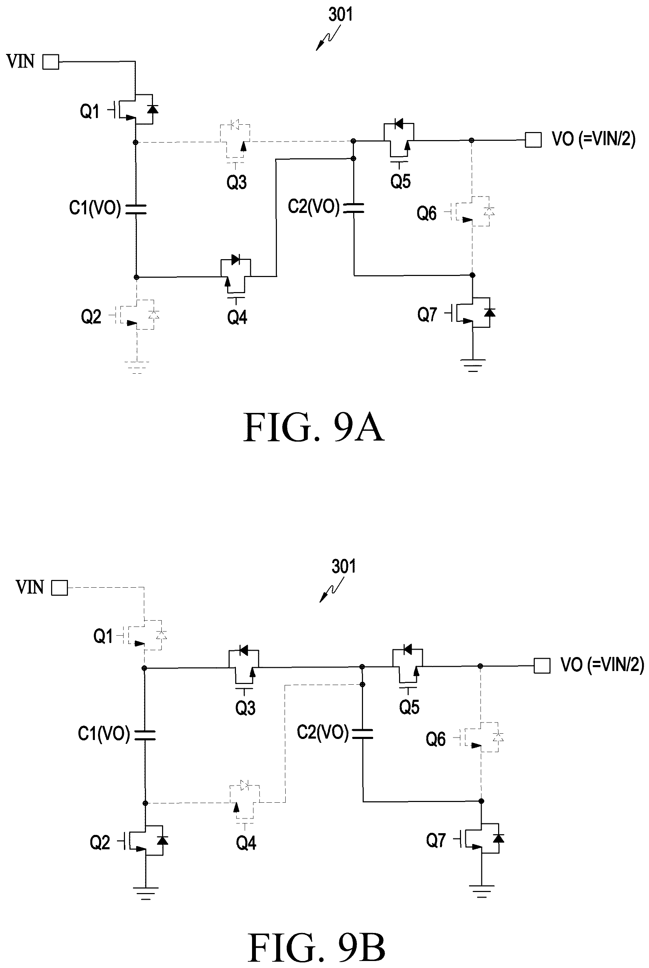

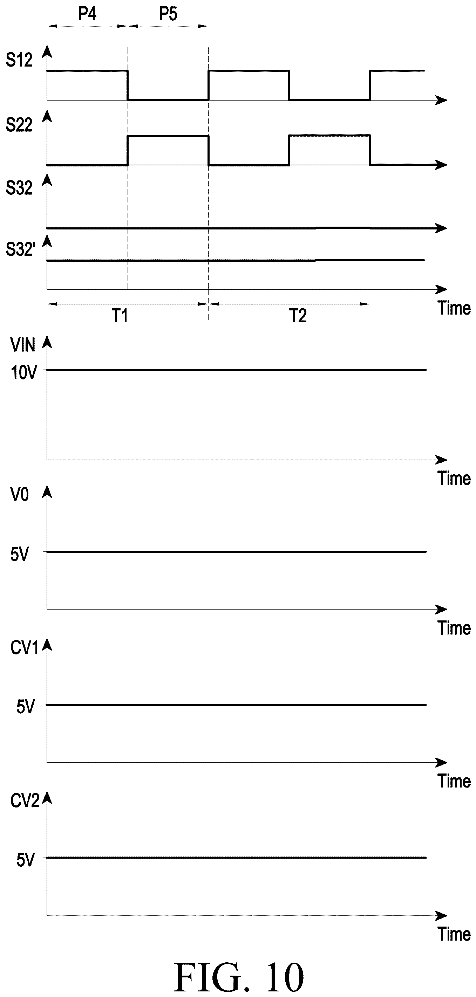

FIGS. 9A and 9B are views illustrating an operation of an electronic device charging a battery according to a second mode according to an embodiment. FIG. 10 illustrates graphs illustrating an operation of an electronic device charging a battery according to a second mode according to an embodiment.

Referring to FIGS. 9A to 10, according to an embodiment, the direct charger 301 may control the plurality of switches Q1, Q2, Q3, Q4, Q5, Q6, Q7 to output a fourth power having an output voltage VO while charging the first capacitor C1 and the second capacitor C2 by connecting the first capacitor C1 and the second capacitor C2 in parallel based on a third power having an input voltage VIN in the fourth phase P4 of the switching period T1. For example, the direct charger 301 may turn on the first switch Q1, the fourth switch Q4, the fifth switch Q5, and the seventh switch Q7, and turn off the second switch Q2, the third switch Q3, and the sixth switch Q5.

Referring to FIG. 10, according to an embodiment, a control circuit included in the direct charger 301 may output control signals S1, S2, S3, S3' for controlling on/off of the plurality of switches Q1, Q2, Q3, Q4, Q5, Q6, Q7 to the plurality of switches Q1, Q2, Q3, Q4, Q5, Q6, Q7 in the fourth phase P4. For example, a high-level control signal may turn on the corresponding switch. Further, a low-level control signal may turn off the corresponding switch. For example, the control circuit may output a high-level first control signal S12 to the first switch Q1 and the fourth switch Q4 in the fourth phase P4. The control circuit may output a low-level second control signal S22 to the second switch Q2 and the third switch Q3. The control circuit may output a low-level third control signal S32 to the sixth switch Q6. The control circuit may output a high-level fourth control signal S32' to the fifth switch Q5 and the seventh switch Q7. Further, e.g., the fourth control signal S32' may refer to a signal obtained by inverting the third control signal S3.

According to an embodiment, in the fourth phase P4, voltages applied to the first capacitor C1 and the second capacitor C2 may be determined by Equation 4. For example, VIN may be the input voltage of the direct charger 301, and VO may be the output voltage of the direct charger 301. CV1 may be a voltage applied to the first capacitor C1, and CV2 may be a voltage applied to the second capacitor C1.

【Equation 4】

$$VIN = CV1 + VO, CV2 = VO$$

Referring to FIGS. 9B and 10, according to an embodiment, the direct charger 301 may control the plurality of switches Q1, Q2, Q3, Q4, Q5, Q6, Q7 to output a fourth power having an output voltage VO to the battery 270 based on power charged in the first capacitor C1 and the second capacitor C2 in the fifth phase P5 of the switching period T1. For example, the direct charger 301 may turn on the second switch Q2, the third switch Q3, the fifth switch Q5, and the seventh switch Q7, and turn off the first switch Q1, the fourth switch Q4, and the sixth switch Q6. For example, a control circuit included in the direct charger 301 may output a control signal for controlling on/off of the plurality of switches Q1, Q2, Q3, Q4, Q5, Q6, Q7 to the plurality of switches Q1, Q2, Q3, Q4, Q5, Q6, Q7.

Referring to FIG. 10, according to an embodiment, the control circuit included in the direct charger 301 may output a low-level first control signal S12 to the first switch Q1 and the fourth switch Q4 in the fifth phase P5. The control circuit may output a high-level second control signal S22 to the second switch Q2 and the third switch Q3. The control circuit may output a low-level third control signal S32 to the sixth switch Q6. Further, the control circuit may output a high-level fourth control signal S32' to the fifth switch Q5 and the seventh switch Q7.

According to an embodiment, in the fifth phase P5, voltages applied to the first capacitor C1 and the second capacitor C2 may be determined by Equation 5.

【Equation 5】

$$CV1 = VO, CV2 = VO$$

Based on the above-described Equations 4 and 5, the voltage applied to each of the first capacitor C1 and the second capacitor C2 may be a voltage VO (e.g., 5V) having the same magnitude as the output voltage VO of the direct charger 301.

Referring to FIG. 10, according to an embodiment, the voltage (e.g., DC voltage) applied to each of the first capacitor C1 and the second capacitor C2 in one switching period T1 may maintain a voltage VO (e.g., 5V) having the same magnitude as the output voltage VO (e.g., 5V) of the direct charger 301. Further, the magnitude of the voltage applied to each of the first capacitor C1 and the second capacitor C2 may be maintained in the next switching period T2.

According to the above-described method, the electronic device 201 may supply power having an output voltage VO that is 1/2 times the input voltage VIN to the battery 270 using the direct charger 301.

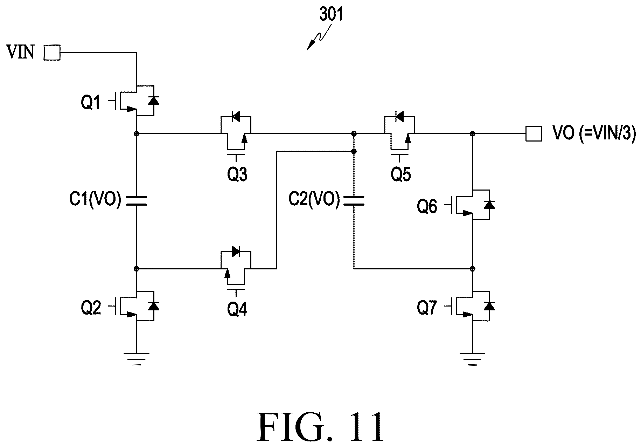

FIG. 11 is a circuit diagram illustrating a direct charger charging a battery according to a third mode according to an embodiment.

Referring to FIG. 11, according to an embodiment, the direct charger 301 may control on/off of the plurality of switches Q1, Q2, Q3, Q4, Q5, Q6, Q7 in the third mode to output power having an output voltage VO (e.g., 5V) that is 1/3 times the input voltage VO (e.g., 15V) to a battery (e.g., the battery 270 of FIG. 2).

According to an embodiment, the direct charger 301 may control on/off of the plurality of switches Q1, Q2, Q3, Q4, Q5, Q6, Q7 differently from the first mode and the second mode in the third mode. For example, the direct charger 301 may turn on the first switch Q1, the fourth switch Q4, and the sixth switch Q6 and turn off the remaining switches Q2, Q3, Q5, Q7 during one phase period included in one switching period in the third mode. Further, the direct charger 301 may turn off the first switch Q1, the fourth switch Q4, and the sixth switch Q6 and turn on the remaining switches Q2, Q3, Q5, Q7 during another phase period included in one switching period in the third mode.

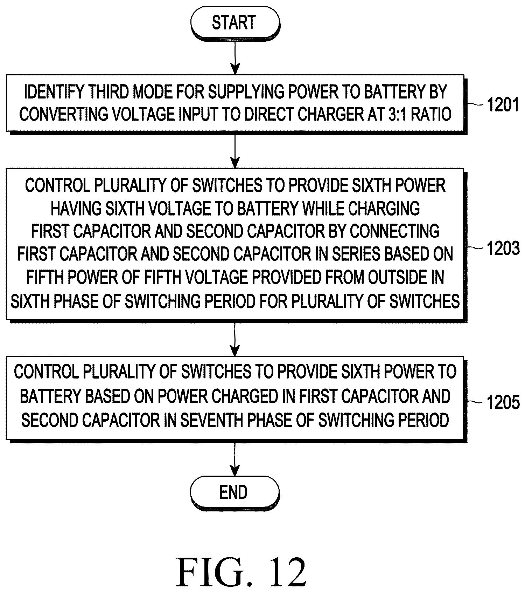

FIG. 12 is a flowchart illustrating an operation of an electronic device charging a battery according to a third mode according to an embodiment.

According to an embodiment, in operation 1201, an electronic device (e.g., the electronic device 201 of FIG. 2) may identify or determine a third mode for supplying power to a battery (e.g., the battery 270 of FIG. 2) by converting a first voltage VIN input to a direct charger (e.g., the direct charger 301 of FIG. 3B) at a 3:1 ratio based on a first power of a first voltage VIN provided from an external power transmitter (e.g., the power transmitter 210 of FIG. 2).

According to an embodiment, the electronic device 201 may control on/off of a plurality of switches (e.g., Q1, Q2, Q3, Q4, Q5, Q6, Q7 of FIG. 3B) included in the direct charger according to a designated switching period. For example, the switching period in the third mode may include two phases (e.g., sixth phase and seventh phase). For example, the length of the sixth phase and the length of the seventh phase may be the same. For example, the switching period may be automatically set by the processor 220 or set by a user.

According to an embodiment, in operation 1203, the electronic device 201 may control the plurality of switches Q1, Q2, Q3, Q4, Q5, Q6, Q7 to provide a sixth power having a sixth voltage VO to the battery 270 while charging the first capacitor C1 and the second capacitor C2 by connecting the first capacitor C1 and the second capacitor C2 in series based on a fifth power of a fifth voltage VIN provided from outside in the sixth phase of the switching period for the plurality of switches Q1, Q2, Q3, Q4, Q5, Q6, Q7. For example, the fifth power may refer to power (e.g., input power) input from the power transmitter 210 to the direct charger 301. The sixth power may refer to power (e.g., output power) output from the direct charger 301 to the battery 270. For example, the fifth voltage VIN may refer to a voltage (e.g., input voltage) input to the direct charger 301. The sixth voltage VO may refer to a voltage (e.g., output voltage) output from the direct charger 301. In the third mode, the fifth voltage VIN may be three times the sixth voltage VO.

According to an embodiment, in operation 1205, the electronic device 201 may control the plurality of switches Q1, Q2, Q3, Q4, Q5, Q6, Q7 to provide the sixth power to the battery 270 based on power charged in the first capacitor C1 and the second capacitor C2 in the seventh phase (e.g., phase after the sixth phase) of the switching period.

According to an embodiment, while the above-described operations are performed, a voltage VO having the same magnitude as the output voltage VO of the direct charger 301 may be applied to each of the first capacitor C1 and the second capacitor C2. For example, the voltage (e.g., DC voltage) applied to each of the first capacitor C1 and the second capacitor C2 in one switching period may maintain a voltage VO having the same magnitude as the output voltage VO of the direct charger 301.

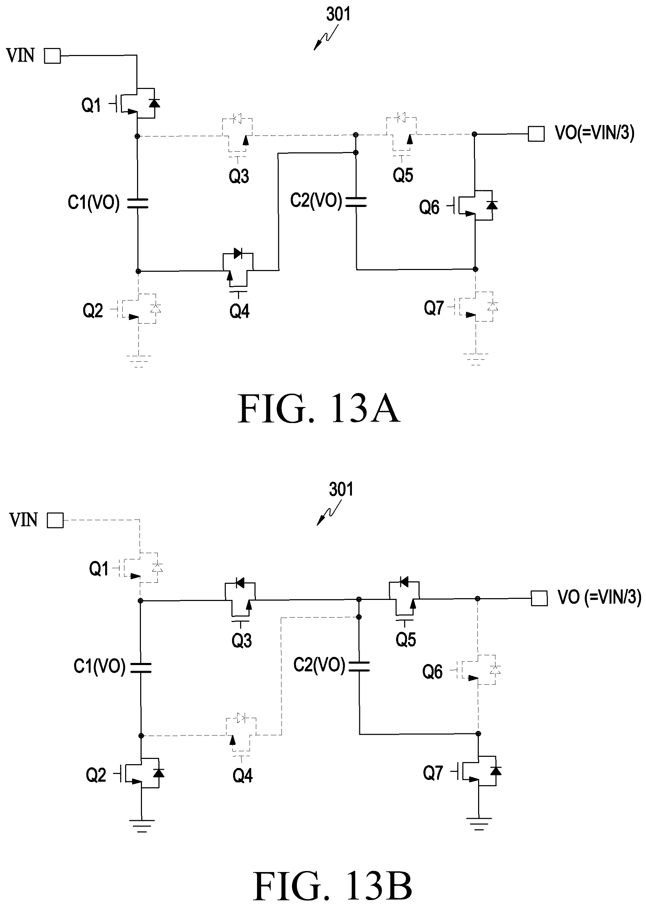

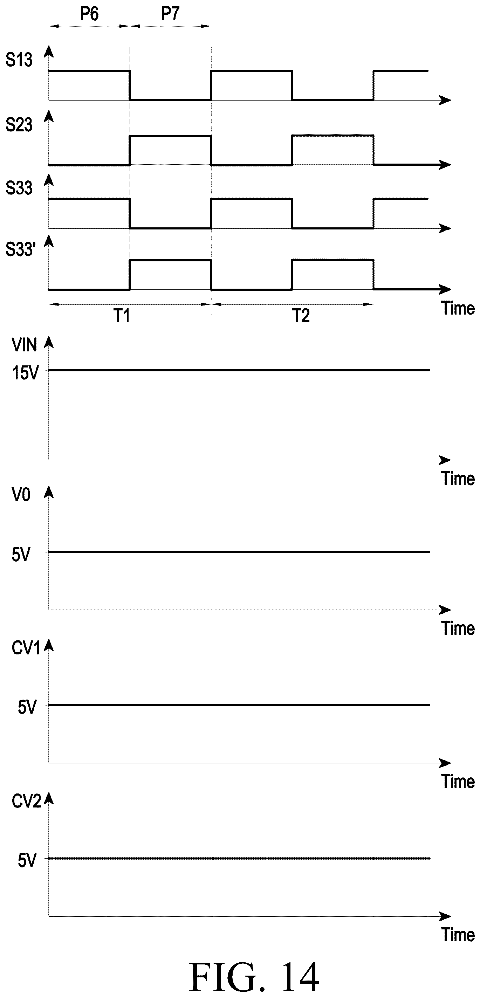

FIGS. 13A and 13B are views illustrating an operation of an electronic device charging a battery according to a third mode according to an embodiment. FIG. 14 illustrates graphs illustrating an operation of an electronic device charging a battery according to a third mode according to an embodiment.

Referring to FIGS. 13A to 14, according to an embodiment, the direct charger 301 may control the plurality of switches Q1, Q2, Q3, Q4, Q5, Q6, Q7 to output a sixth power having an output voltage VO while charging the first capacitor C1 and the second capacitor C2 by connecting the first capacitor C1 and the second capacitor C2 in series based on a fifth power having an input voltage VIN in the sixth phase P6 of the switching period T1. For example, the direct charger 301 may turn on the first switch Q1, the fourth switch Q4, and the sixth switch Q6, and turn off the second switch Q2, the third switch Q3, the fifth switch Q5, and the seventh switch Q7.

Referring to FIG. 14, according to an embodiment, a control circuit included in the direct charger 301 may output control signals S1, S2, S3, S3' for controlling on/off of the plurality of switches Q1, Q2, Q3, Q4, Q5, Q6, Q7 to the plurality of switches Q1, Q2, Q3, Q4, Q5, Q6, Q7 in the sixth phase P6. For example, the control circuit may output a high-level first control signal S13 to the first switch Q1 and the fourth switch Q4 in the sixth phase P6. The control circuit may output a low-level second control signal S23 to the second switch Q2 and the third switch Q3. The control circuit may output a high-level third control signal S33 to the sixth switch Q6. The control circuit may output a low-level fourth control signal S33' to the fifth switch Q5 and the seventh switch Q7. According to the implementation, the control circuit may output a high-level first control signal S13 to the first switch Q1, the fourth switch Q4, and the sixth switch Q6 and output a low-level second control signal S23 to the second switch Q2, the third switch Q3, the fifth switch Q5, and the seventh switch Q7 in the sixth phase P6.

According to an embodiment, in the sixth phase P6, voltages applied to the first capacitor C1 and the second capacitor C2 may be determined by Equation 6. For example, VIN may be the input voltage of the direct charger 301, and VO may be the output voltage of the direct charger 301. CV1 may be a voltage applied to the first capacitor C1, and CV2 may be a voltage applied to the second capacitor C1.

【Equation 6】

$$VIN = CV1 + CV2 + VO$$

Referring to FIGS. 13B and 14, according to an embodiment, the direct charger 301 may control the plurality of switches Q1, Q2, Q3, Q4, Q5, Q6, Q7 to output a sixth power having an output voltage VO to the battery 270 based on power charged in the first capacitor C1 and the second capacitor C2 in the seventh phase P7 of the switching period T1. For example, the direct charger 301 may turn on the second switch Q2, the third switch Q3, the fifth switch Q5, and the seventh switch Q7, and turn off the first switch Q1, the fourth switch Q4, and the sixth switch Q6. For example, a control circuit included in the direct charger 301 may output a control signal for controlling on/off of the plurality of switches Q1, Q2, Q3, Q4, Q5, Q6, Q7 to the plurality of switches Q1, Q2, Q3, Q4, Q5, Q6, Q7.

Referring to FIG. 14, according to an embodiment, the control circuit included in the direct charger 301 may output a low-level first control signal S13 to the first switch Q1 and the fourth switch Q4 in the seventh phase P7. The control circuit may output a high-level second control signal S23 to the second switch Q2 and the third switch Q3. The control circuit may output a low-level third control signal S33 to the sixth switch Q6. The control circuit may output a high-level fourth control signal S33' to the fifth switch Q5 and the seventh switch Q7. According to the implementation, the control circuit may output a low-level first control signal S13 to the first switch Q1, the fourth switch Q4, and the sixth switch Q6 and output a high-level second control signal S23 to the second switch Q2, the third switch Q3, the fifth switch Q5, and the seventh switch Q7 in the seventh phase P7.

According to an embodiment, in the seventh phase P7, voltages applied to the first capacitor C1 and the second capacitor C2 may be determined by Equation 7.

【Equation 7】

$$CV1 = CV2 = VO$$

Based on the above-described Equations 6 and 7, the voltage applied to each of the first capacitor C1 and the second capacitor C2 may be a voltage VO (e.g., 5V) having the same magnitude as the output voltage VO of the direct charger 301.

Referring to FIG. 14, according to an embodiment, the voltage (e.g., DC voltage) applied to each of the first capacitor C1 and the second capacitor C2 in one switching period T1 may maintain a voltage VO (e.g., 5V) having the same magnitude as the output voltage VO (e.g., 5V) of the direct charger 301. Further, the magnitude of the voltage applied to each of the first capacitor C1 and the second capacitor C2 may be maintained in the next switching period T2.

According to the above-described method, the electronic device 201 may supply power having an output voltage VO that is 1/3 times the input voltage VIN to the

**EP 4 708 612 A1**

battery 270 using the direct charger 301.

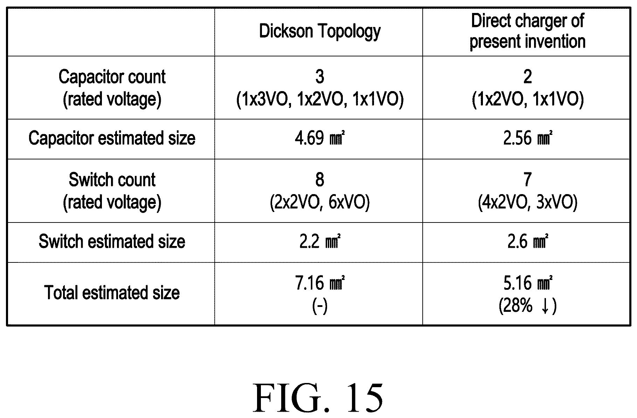

FIG. 15 is a view illustrating effects of a direct charger according to an embodiment.

Referring to FIG. 15, the direct charger 301 according to an embodiment may reduce the number and size of flying capacitors compared to the direct charger 300 based on the Dickson topology described with reference to FIG. 3A. For example, the predicted capacitor size of the direct charger 301 due to the reduction in the number and size of capacitors may be significantly decreased (e.g., decreased from 4.69mm$^2$ to 2.56mm$^2$).

The direct charger 301 according to an embodiment may reduce the number of switches (e.g., from 8 to 7) compared to the direct charger 300 based on the Dickson topology described with reference to FIG. 3A. However, as the number of switches with a high rated voltage is increased, the predicted switch size of the direct charger 301 may be slightly increased (e.g., increased from 2.2mm$^2$ to 2.6mm$^2$) compared to the direct charger 300 based on the Dickson topology.

The direct charger 301 according to an embodiment may have a decreased overall predicted size (e.g., decreased from 7.16mm$^2$ to 5.16mm$^2$) compared to the direct charger 300 based on the Dickson topology described with reference to FIG. 3A.

Accordingly, the direct charger 301 may reduce the mounting area compared to the conventional direct charger 300. Further, the direct charger 301 according to an embodiment may have decreased product production costs compared to the conventional direct charger 300 because the number of required components is decreased.

The electronic device 201 according to an embodiment may include a battery 270, a direct charger 250, 301 including a first capacitor, a second capacitor and a plurality of switches, and a control circuit 220. The control circuit according to an embodiment may be configured to identify a first mode for supplying power to the battery by converting a voltage input to the direct charger at a 4:1 ratio. The control circuit according to an embodiment may be configured to control the plurality of switches to provide a second power having a second voltage to the battery while charging the first capacitor and the second capacitor by connecting the first capacitor and the second capacitor in series based on a first power of a first voltage received from outside in a first phase of a switching period for the plurality of switches. The first voltage according to an embodiment may have a magnitude four times the second voltage. The control circuit according to an embodiment may be configured to control the plurality of switches to provide the second power to the battery while charging the second capacitor based on power charged in the first capacitor in a second phase after the first phase of the switching period. The control circuit according to an embodiment may be configured to control the plurality of switches to provide the second power to the battery based on power charged in the second capacitor in a third phase after the second phase of the switching period. According to an embodiment, during the first phase, the second phase, and the third phase, a voltage having a magnitude twice the second voltage may be applied to the first capacitor, and a voltage having the same magnitude as the second voltage may be applied to the second capacitor. According to an embodiment, even when a length of at least one of the first phase, the second phase, or the third phase is changed, the voltage having the magnitude twice the second voltage may be applied to the first capacitor, and the voltage having the same magnitude as the second voltage may be applied to the second capacitor.

According to an embodiment, a sum of lengths of the first phase and the second phase may be longer than a length of the third phase.

According to an embodiment, the control circuit may be configured to determine a length of the first phase and a length of the second phase to be equal lengths.

According to an embodiment, a first switch among the plurality of switches may be connected between an input terminal of the direct charger and one end of the first capacitor. According to an embodiment, a second switch among the plurality of switches may be connected between the other end of the first capacitor and ground. According to an embodiment, a third switch among the plurality of switches may be connected between the one end of the first capacitor and one end of the second capacitor. According to an embodiment, a fourth switch among the plurality of switches may be connected between the other end of the first capacitor and the one end of the second capacitor. According to an embodiment, a fifth switch among the plurality of switches may be connected between the one end of the second capacitor and an output terminal of the direct charger. According to an embodiment, a sixth switch among the plurality of switches may be connected between the other end of the second capacitor and the output terminal of the direct charger. According to an embodiment, a seventh switch among the plurality of switches may be connected between the other end of the second capacitor and the ground.

According to an embodiment, the control circuit may be configured to identify a second mode for supplying power to the battery by converting a voltage input to the direct charger at a 2:1 ratio. According to an embodiment, the control circuit may be configured to control the plurality of switches to provide a fourth power having a fourth voltage to the battery while charging the first capacitor and the second capacitor by connecting the first capacitor and the second capacitor in parallel based on a third power of a third voltage received from outside in a fourth phase of a switching period for the plurality of switches. According to an embodiment, the third voltage may have a magnitude twice the fourth voltage. According to an embodiment, the control circuit may be configured to control the plurality of switches to provide the fourth power to the battery based on power charged in the first capacitor and the second capacitor in a fifth phase after the fourth phase of the switching period.

According to an embodiment, the control circuit may be configured to determine a length of the fourth phase and a length of the fifth phase to be equal lengths.

According to an embodiment, during the fourth phase and the fifth phase, a voltage having the same magnitude as the fourth voltage may be applied to each of the first capacitor and the second capacitor.

According to an embodiment, the control circuit may be configured to identify a third mode for supplying power to the battery by converting a voltage input to the direct charger at a 3:1 ratio. According to an embodiment, the control circuit may be configured to control the plurality of switches to provide a sixth power having a sixth voltage to the battery while charging the first capacitor and the second capacitor by connecting the first capacitor and the second capacitor in series based on a fifth power of a fifth voltage received from outside in a sixth phase of a switching period for the plurality of switches. According to an embodiment, the fifth voltage may have a magnitude three times the sixth voltage. According to an embodiment, the control circuit may be configured to control the plurality of switches to provide the sixth power to the battery based on power charged in the first capacitor and the second capacitor in a seventh phase after the sixth phase of the switching period.

According to an embodiment, the control circuit may be configured to determine a length of the sixth phase and a length of the seventh phase to be equal lengths.

According to an embodiment, during the sixth phase and the seventh phase, a voltage having the same magnitude as the sixth voltage may be applied to each of the first capacitor and the second capacitor.

According to an embodiment, the control circuit may be configured to change a length of at least one of the first phase, the second phase, or the third phase based on identifying a transient state for a system load of the electronic device.

In a method of operating the electronic device 201 according to an embodiment, the electronic device may include a battery 270 and a direct charger 250, 301, wherein the direct charger may include a first capacitor, a second capacitor and a plurality of switches. The method of operating the electronic device according to an embodiment may include identifying a first mode for supplying power to the battery by converting a voltage input to the direct charger at a 4:1 ratio. The method of operating the electronic device according to an embodiment may include controlling the plurality of switches to provide a second power having a second voltage to the battery while charging the first capacitor and the second capacitor by connecting the first capacitor and the second capacitor in series based on a first power of a first voltage received from outside in a first phase of a switching period for the plurality of switches. The first voltage according to an embodiment may have a magnitude four times the second voltage. The method of operating the electronic device according to an embodiment may include controlling the plurality of switches to provide the second power to the battery while charging the second capacitor based on power charged in the first capacitor in a second phase after the first phase of the switching period. The method of operating the electronic device according to an embodiment may include controlling the plurality of switches to provide the second power to the battery based on power charged in the second capacitor in a third phase after the second phase of the switching period. According to an embodiment, during the first phase, the second phase, and the third phase, a voltage having a magnitude twice the second voltage may be applied to the first capacitor, and a voltage having the same magnitude as the second voltage may be applied to the second capacitor. According to an embodiment, even when a length of at least one of the first phase, the second phase, or the third phase is changed, the voltage having the magnitude twice the second voltage may be applied to the first capacitor, and the voltage having the same magnitude as the second voltage may be applied to the second capacitor.

According to an embodiment, a sum of lengths of the first phase and the second phase may be longer than a length of the third phase.

The method of operating the electronic device according to an embodiment may further include determining a length of the first phase and a length of the second phase to be equal lengths.

The method of operating the electronic device according to an embodiment may further include identifying a second mode for supplying power to the battery by converting a voltage input to the direct charger at a 2:1 ratio. The method of operating the electronic device according to an embodiment may further include controlling the plurality of switches to provide a fourth power having a fourth voltage to the battery while charging the first capacitor and the second capacitor by connecting the first capacitor and the second capacitor in parallel based on a third power of a third voltage received from outside in a fourth phase of a switching period for the plurality of switches. According to an embodiment, the third voltage may have a magnitude twice the fourth voltage. The method of operating the electronic device according to an embodiment may further include controlling the plurality of switches to provide the fourth power to the battery based on power charged in the first capacitor and the second capacitor in a fifth phase after the fourth phase of the switching period.

The method of operating the electronic device according to an embodiment may further include determining a length of the fourth phase and a length of the fifth phase to be equal lengths.

According to an embodiment, during the fourth phase and the fifth phase, a voltage having the same magnitude as the fourth voltage may be applied to each of the first capacitor and the second capacitor.

The method of operating the electronic device according to an embodiment may further include identifying a third mode for supplying power to the battery by converting a voltage input to the direct charger at a 3:1 ratio. The method of operating the electronic device according to an embodiment may further include controlling the plurality of switches to provide a sixth power having a sixth voltage to the battery while charging the first capacitor and the second capacitor by connecting the first capacitor and the second capacitor in series based on a fifth power of a fifth voltage received from outside in a sixth phase of a switching period for the plurality of switches. According to an embodiment, the fifth voltage may have a magnitude three times the sixth voltage. The method of operating the electronic device according to an embodiment may further include controlling the plurality of switches to provide the sixth power to the battery based on power charged in the first capacitor and the second capacitor in a seventh phase after the sixth phase of the switching period.

The method of operating the electronic device according to an embodiment may further include determining a length of the sixth phase and a length of the seventh phase to be equal lengths.

According to an embodiment, during the sixth phase and the seventh phase, a voltage having the same magnitude as the sixth voltage may be applied to each of the first capacitor and the second capacitor.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device (201) comprising:

   a battery (270);
   a direct charger (250, 301) comprising a first capacitor, a second capacitor and a plurality of switches; and
   a control circuit (220), wherein the control circuit is configured to:

   identify a first mode for supplying power to the battery by converting a voltage input to the direct charger at a 4:1 ratio;
   control the plurality of switches to provide a second power having a second voltage to the battery while charging the first capacitor and the second capacitor by connecting the first capacitor and the second capacitor in series based on a first power of a first voltage received from outside in a first phase of a switching period for the plurality of switches, wherein the first voltage has a magnitude four times the second voltage;
   control the plurality of switches to provide the second power to the battery while charging the second capacitor based on power charged in the first capacitor in a second phase after the first phase of the switching period; and
   control the plurality of switches to provide the second power to the battery based on power charged in the second capacitor in a third phase after the second phase of the switching period, wherein during the first phase, the second phase, and the third phase, a voltage having a magnitude twice the second voltage is applied to the first capacitor, and a voltage having a same magnitude as the second voltage is applied to the second capacitor, and wherein even when a length of at least one of the first phase, the second phase, or the third phase is changed, the voltage having the magnitude twice the second voltage is applied to the first capacitor, and the voltage having the same magnitude as the second voltage is applied to the second capacitor.

2. The electronic device of claim 1, wherein a sum of lengths of the first phase and the second phase is longer than a length of the third phase.

3. The electronic device of claim 1 or 2, wherein the control circuit is configured to determine a length of the first phase and a length of the second phase to be equal lengths.

4. The electronic device of any one of claims 1 to 3, wherein a first switch among the plurality of switches is connected between an input terminal of the direct charger and one end of the first capacitor,

   a second switch among the plurality of switches is connected between another end of the first capacitor and ground,
   a third switch among the plurality of switches is connected between the one end of the first capacitor and one end of the second capacitor,
   a fourth switch among the plurality of switches is connected between the other end of the first capacitor and the one end of the second capacitor,
   a fifth switch among the plurality of switches is connected between the one end of the second capacitor and an output terminal of the direct charger,
   a sixth switch among the plurality of switches is connected between another end of the second capacitor and the output terminal of the direct charger, and
   a seventh switch among the plurality of switches is connected between the other end of the second capacitor and the ground.

5. The electronic device of any one of claims 1 to 4, wherein the control circuit is configured to:

   identify a second mode for supplying power to the battery by converting a voltage input to the direct charger at a 2:1 ratio;
   control the plurality of switches to provide a fourth power having a fourth voltage to the battery while charging the first capacitor and the second capacitor by connecting the first capacitor and the second capacitor in parallel based on a third power of a third voltage received from outside in a fourth phase of a switching period for the plurality of switches, wherein the third voltage has a magnitude twice the fourth voltage; and

control the plurality of switches to provide the fourth power to the battery based on power charged in the first capacitor and the second capacitor in a fifth phase after the fourth phase of the switching period.

6. The electronic device of any one of claims 1 to 5, wherein the control circuit is configured to determine a length of the fourth phase and a length of the fifth phase to be equal lengths.

7. The electronic device of any one of claims 1 to 6, wherein during the fourth phase and the fifth phase, a voltage having a same magnitude as the fourth voltage is applied to each of the first capacitor and the second capacitor.

8. The electronic device of any one of claims 1 to 7, wherein the control circuit is configured to:

identify a third mode for supplying power to the battery by converting a voltage input to the direct charger at a 3:1 ratio;
control the plurality of switches to provide a sixth power having a sixth voltage to the battery while charging the first capacitor and the second capacitor by connecting the first capacitor and the second capacitor in series based on a fifth power of a fifth voltage received from outside in a sixth phase of a switching period for the plurality of switches, wherein the fifth voltage has a magnitude three times the sixth voltage; and
control the plurality of switches to provide the sixth power to the battery based on power charged in the first capacitor and the second capacitor in a seventh phase after the sixth phase of the switching period.

9. The electronic device of any one of claims 1 to 8, wherein the control circuit is configured to determine a length of the sixth phase and a length of the seventh phase to be equal lengths.

10. The electronic device of any one of claims 1 to 9, wherein during the sixth phase and the seventh phase, a voltage having a same magnitude as the sixth voltage is applied to each of the first capacitor and the second capacitor.

11. The electronic device of any one of claims 1 to 10, wherein the control circuit is configured to change a length of at least one of the first phase, the second phase, or the third phase based on identifying a transient state for a system load of the electronic device.

12. A method of operating an electronic device (201), wherein the electronic device includes a battery (270) and a direct charger (250, 301), wherein the direct charger includes a first capacitor, a second capacitor and a plurality of switches, the method comprising:

identifying a first mode for supplying power to the battery by converting a voltage input to the direct charger at a 4:1 ratio;
controlling the plurality of switches to provide a second power having a second voltage to the battery while charging the first capacitor and the second capacitor by connecting the first capacitor and the second capacitor in series based on a first power of a first voltage received from outside in a first phase of a switching period for the plurality of switches, wherein the first voltage has a magnitude four times the second voltage;
controlling the plurality of switches to provide the second power to the battery while charging the second capacitor based on power charged in the first capacitor in a second phase after the first phase of the switching period; and
controlling the plurality of switches to provide the second power to the battery based on power charged in the second capacitor in a third phase after the second phase of the switching period, wherein during the first phase, the second phase, and the third phase, a voltage having a magnitude twice the second voltage is applied to the first capacitor, and a voltage having a same magnitude as the second voltage is applied to the second capacitor, and wherein even when a length of at least one of the first phase, the second phase, or the third phase is changed, the voltage having the magnitude twice the second voltage is applied to the first capacitor, and the voltage having the same magnitude as the second voltage is applied to the second capacitor.

13. The method of claim 12, wherein a sum of lengths of the first phase and the second phase is longer than a length of the third phase.

14. The method of claim 12 or 13, further comprising: determining a length of the first phase and a length of the second phase to be equal lengths.

15. The method of any one of claims 12 to 14, further comprising:

identifying a second mode for supplying power to the battery by converting a voltage input to the direct charger at a 2:1 ratio;
controlling the plurality of switches to provide a fourth power having a fourth voltage to the battery while charging the first capacitor and the second capacitor by connecting the first capacitor and the second capacitor in parallel based on a third power of a third voltage received from outside in a fourth phase of a switching period for the plurality of switches, wherein the third voltage has a magnitude twice the fourth voltage; and

controlling the plurality of switches to provide the fourth power to the battery based on power charged in the first capacitor and the second capacitor in a fifth phase after the fourth phase of the switching period.

FIG. 1

EP 4 708 612 A1

FIG. 2A

START

IDENTIFY MAGNITUDE OF
POWER PROVIDED FROM TA — 291

IDENTIFY ONE MODE AMONG FIRST MODE,
SECOND MODE, OR THIRD MODE — 293
BASED ON MAGNITUDE OF POWER

PERFORM BATTERY CHARGING
BASED ON IDENTIFIED MODE — 295

END

FIG. 2B

FIG. 3A

FIG. 3B

START

IDENTIFY FIRST MODE FOR SUPPLYING POWER TO BATTERY BY
CONVERTING VOLTAGE INPUT TO DIRECT CHARGER AT 4:1 RATIO — 401

CONTROL PLURALITY OF SWITCHES TO PROVIDE SECOND POWER
HAVING SECOND VOLTAGE TO BATTERY WHILE CHARGING
FIRST CAPACITOR AND SECOND CAPACITOR BY CONNECTING
FIRST CAPACITOR AND SECOND CAPACITOR IN SERIES BASED ON — 403
FIRST POWER OF FIRST VOLTAGE PROVIDED FROM OUTSIDE IN
FIRST PHASE OF SWITCHING PERIOD FOR PLURALITY OF SWITCHES

CONTROL PLURALITY OF SWITCHES TO PROVIDE SECOND POWER
TO BATTERY WHILE CHARGING SECOND CAPACITOR BASED ON
POWER CHARGED IN FIRST CAPACITOR IN — 405
SECOND PHASE OF SWITCHING PERIOD

CONTROL PLURALITY OF SWITCHES TO PROVIDE SECOND POWER
TO BATTERY BASED ON POWER CHARGED IN SECOND CAPACITOR — 407
IN THIRD PHASE OF SWITCHING PERIOD

END

FIG. 4

301

VIN ☐

Q1

VO (=VIN/4)

Q3

Q5

C1(2VO)

C2(VO)

Q6

Q2

Q4

Q7

# FIG. 5A

301

VIN ☐

Q1

Q3

C1(2VO)

C2(VO)

Q5

VO (=VIN/4)

Q6

Q2

Q4

Q7

# FIG. 5B

FIG. 5C

FIG. 6

FIG. 7

START

IDENTIFY SECOND MODE FOR SUPPLYING POWER TO BATTERY BY
CONVERTING VOLTAGE INPUT TO DIRECT CHARGER AT 2:1 RATIO ~801

CONTROL PLURALITY OF SWITCHES TO PROVIDE FOURTH POWER
HAVING FOURTH VOLTAGE TO BATTERY WHILE CHARGING
FIRST CAPACITOR AND SECOND CAPACITOR BY CONNECTING
FIRST CAPACITOR AND SECOND CAPACITOR IN PARALLEL ~803
BASED ON THIRD POWER OF THIRD VOLTAGE PROVIDED FROM
OUTSIDE IN FOURTH PHASE OF SWITCHING
PERIOD FOR PLURALITY OF SWITCHES

CONTROL PLURALITY OF SWITCHES TO PROVIDE FOURTH POWER
TO BATTERY BASED ON POWER CHARGED IN FIRST CAPACITOR ~805
AND SECOND CAPACITOR IN FIFTH PHASE OF SWITCHING PERIOD

END

FIG. 8

301

VIN

Q1

C1(VO)

Q2

Q3

Q4

C2(VO)

Q5

Q6

VO (=VIN/2)

Q7

# FIG. 9A

301

VIN

Q1

C1(VO)

Q2

Q3

Q4

C2(VO)

Q5

Q6

VO (=VIN/2)

Q7

# FIG. 9B

FIG. 10

VIN ▢

301

Q1

VO (=VIN/3)

Q3          Q5

C1(VO)      C2(VO)      Q6

Q4          Q7

Q2

# FIG. 11

START

IDENTIFY THIRD MODE FOR SUPPLYING POWER TO BATTERY BY
CONVERTING VOLTAGE INPUT TO DIRECT CHARGER AT 3:1 RATIO ⟩~1201

CONTROL PLURALITY OF SWITCHES TO PROVIDE SIXTH POWER
HAVING SIXTH VOLTAGE TO BATTERY WHILE CHARGING
FIRST CAPACITOR AND SECOND CAPACITOR BY CONNECTING
FIRST CAPACITOR AND SECOND CAPACITOR IN SERIES BASED ON ⟩~1203
FIFTH POWER OF FIFTH VOLTAGE PROVIDED FROM OUTSIDE IN
SIXTH PHASE OF SWITCHING PERIOD FOR PLURALITY OF SWITCHES

CONTROL PLURALITY OF SWITCHES TO PROVIDE SIXTH POWER TO
BATTERY BASED ON POWER CHARGED IN FIRST CAPACITOR AND ⟩~1205
SECOND CAPACITOR IN SEVENTH PHASE OF SWITCHING PERIOD

END

FIG. 12

FIG. 13A

FIG. 13B

FIG. 14

| | Dickson Topology | Direct charger of present invention |
|---|---|---|
| Capacitor count (rated voltage) | 3 (1x3VO, 1x2VO, 1x1VO) | 2 (1x2VO, 1x1VO) |
| Capacitor estimated size | 4.69 mm² | 2.56 mm² |
| Switch count (rated voltage) | 8 (2x2VO, 6xVO) | 7 (4x2VO, 3xVO) |
| Switch estimated size | 2.2 mm² | 2.6 mm² |
| Total estimated size | 7.16 mm² (-) | 5.16 mm² (28% ↓) |

# FIG. 15

## INTERNATIONAL SEARCH REPORT

| International application No. |
| --- |
| **PCT/KR2024/006867** |

| A. | CLASSIFICATION OF SUBJECT MATTER |
| --- | --- |

**H02J 7/00**(2006.01)i; **H02M 3/07**(2006.01)i; **H01M 10/44**(2006.01)i; **H02J 7/34**(2006.01)i

According to International Patent Classification (IPC) or to both national classification and IPC

| B. | FIELDS SEARCHED |
| --- | --- |

Minimum documentation searched (classification system followed by classification symbols)

H02J 7/00(2006.01); B60L 11/18(2006.01); H02J 7/04(2006.01); H02J 7/34(2006.01); H02M 1/00(2007.01); H02M 3/07(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 다이렉트 차저(direct charger), 커패시터(capacitor), 직렬(series), 충전(charging), 스위치(switch)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2020-0136594 A (SAMSUNG ELECTRONICS CO., LTD.) 08 December 2020 (2020-12-08)<br>See paragraphs [0073]-[0080]; claims 1-2 and 9; and figures 1-5c. | 1-3,12-14 |
| A | KR 10-2023-0039340 A (SAMSUNG ELECTRONICS CO., LTD.) 21 March 2023 (2023-03-21)<br>See paragraphs [0014]-[0190]; claims 1-13; and figures 1-17. | 1-3,12-14 |
| A | KR 10-2021-0137628 A (EKOS. CO., LTD.) 18 November 2021 (2021-11-18)<br>See paragraphs [0081]-[0201]; claims 1-12; and figures 7-17. | 1-3,12-14 |
| A | US 11509146 B1 (NUVOLTA TECHNOLOGIES (HEFEI) CO., LTD.) 22 November 2022 (2022-11-22)<br>See column 3, line 59 - column 12, line 13; claims 1-20; and figures 1-4. | 1-3,12-14 |
| A | JP 2004-048913 A (SHIN KOBE ELECTRIC MACHINERY CO., LTD.) 12 February 2004 (2004-02-12)<br>See paragraphs [0009]-[0073]; claims 1-7; and figures 1-10. | 1-3,12-14 |

☐ Further documents are listed in the continuation of Box C.　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **22 August 2024** | **23 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/006867** |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☑ Claims Nos.: **4-11, 15**
   because they are dependent claims and are not drafted in accordance with the second and third sentences of Rule 6.4(a).

Form PCT/ISA/210 (continuation of first sheet) (July 2022)

## INTERNATIONAL SEARCH REPORT
### Information on patent family members

International application No.

**PCT/KR2024/006867**

| Patent document cited in search report | | | Publication date (day/month/year) | Patent family member(s) | | | Publication date (day/month/year) |
|---|---|---|---|---|---|---|---|
| KR | 10-2020-0136594 | A | 08 December 2020 | CN | 113892222 | A | 04 January 2022 |
| | | | | EP | 3942670 | A1 | 26 January 2022 |
| | | | | EP | 3942670 | A4 | 20 April 2022 |
| | | | | US | 11742753 | B2 | 29 August 2023 |
| | | | | US | 2020-0381994 | A1 | 03 December 2020 |
| | | | | WO | 2020-242209 | A1 | 03 December 2020 |
| KR | 10-2023-0039340 | A | 21 March 2023 | WO | 2023-043051 | A1 | 23 March 2023 |
| KR | 10-2021-0137628 | A | 18 November 2021 | KR | 10-2358835 | B1 | 07 February 2022 |
| | | | | WO | 2021-230427 | A1 | 18 November 2021 |
| US | 11509146 | B1 | 22 November 2022 | CN | 114498866 | A | 13 May 2022 |
| | | | | CN | 114498866 | B | 29 July 2022 |
| | | | | CN | 115037011 | A | 09 September 2022 |
| | | | | KR | 10-2509755 | B1 | 14 March 2023 |
| JP | 2004-048913 | A | 12 February 2004 | JP | 3994812 | B2 | 24 October 2007 |

Form PCT/ISA/210 (patent family annex) (July 2022)